# EUROPÄISCHE PATENTSCHRIFT

(11) **EP 3 162 964 B1**
(45) Veröffentlichungstag und Bekanntmachung des Hinweises auf die Patenterteilung: **23.02.2022**
(21) Anmeldenummer: 16194908.6
(22) Anmeldetag: 20.10.2016
(51) Int. Cl.: E02F 9/20, B60R 1/00, G08G 1/16, G06T 5/00, E02F 9/26, E02F 9/24, G08G 1/0962, G06K 9/00, G06K 9/36

(54) **VORRICHTUNG UND VERFAHREN ZUR BEREITSTELLUNG EINER FAHRZEUGUMGEBUNGSANSICHT FÜR EIN FAHRZEUG**
DEVICE AND METHOD FOR PROVIDING A VIEW AROUND A VEHICLE FOR A VEHICLE
DISPOSITIF ET PROCÉDÉ DE FOURNITURE D'UNE VUE ENVIRONNANTE D'UN VÉHICULE AUTOMOBILE

(30) Priorität: 30.10.2015 DE 102015221340
(43) Veröffentlichungstag der Anmeldung: 03.05.2017
(73) Patentinhaber: Conti Temic microelectronic GmbH, 90411 Nürnberg (DE); Deere & Company, Moline, IL 61265 (US)
(72) Erfinder: Petzold, Johannes, 95213 Münchberg (DE); Wolff, Kilian, Moline, IL Illinois 61265 (US)
(74) Vertreter: Isarpatent

(56) Entgegenhaltungen:
- DE-A1-102011 084 554
- DE-A1-102011 087 901
- DE-A1-102013 212 683
- DE-T5-112012 004 354
- JP-A- 2009 232 310
- JP-A- 2012 023 658
- JP-A- 2012 138 660
- US-A1- 2013 222 573
- US-A1- 2014 320 637

## Beschreibung

Die Erfindung betrifft ein Verfahren und eine Vorrichtung zur Bereitstellung einer Fahrzeugumgebungsansicht für ein Fahrzeug, insbesondere für ein Baufahrzeug oder ein Landmaschinenfahrzeug.

Die EP2433837 A1 beschreibt eine landwirtschaftliche Maschine mit einem Kamerasystem zur Bereitstellung einer Rundumansicht.

Die EP 0 845 198 A1 beschreibt eine landwirtschaftliche Maschine mit Sensoren zur Erfassung der Position eines Bearbeitungsgerätes.

Die DE 11 2012 004 354 T5 beschreibt eine Vorrichtung zum Überwachen der Umgebung einer Maschine. Die Vorrichtung enthält mehrere Kameras, welche die Umgebung abbilden. Die Bilddaten der Kameras werden in Abhängigkeit der Höhe der Kameras in eine Vogelperspektive konvertiert und angezeigt.

Druckschrift DE 10 2011 084 554 A1 beschreibt ein Verfahren zur Darstellung eines Fahrzeugumfelds. Die D2 bezieht sich auf ein Verfahren zur Veränderung einer Projektionsebene bei Detektion eines erhabenen Objektes in der Umgebung eines Fahrzeugs. Bei Detektion eines erhabenen Objektes werden die Koordinaten eines Fußpunktes des detektierten erhabenen Objektes und dessen Breite ermittelt. Danach wird die Projektionsebene vor dem detektierten Objekt ausgehend von dessen Fußpunkt angehoben.

Die DE 10 2011 087 901 A1 offenbart ein Verfahren zur Darstellung eines Fahrzeugumfelds. Es werden Bilddaten von der Fahrzeugumgebung erfasst und diese Bilddaten in eine virtuelle kameraperspektive transformiert. Anschließend erfolgt eine Darstellung der transformierten Bilddaten auf einer Anzeigevorrichtung.

Die Druckschrift US 2013/222 573 A beschreibt eine Vorrichtung zur Überwachung der Umgebung einer Maschine. Die Umgebung der Maschine wird durch eine Kamera erfasst und Hindernisse in der Umgebung detektiert. Das Resultat kann in einer Ansicht aus der Vogelperspektive angezeigt werden.

Fahrzeuge verfügen zunehmend über Fahrerassistenzsysteme, welche einen Fahrer des Fahrzeugs bei der Durchführung von Fahrmanövern unterstützen. Derartige Fahrerassistenzsysteme umfassen Anzeigeeinheiten, welche dem Fahrer eine Fahrzeugumgebungsansicht der Fahrzeugumgebung optisch anzeigen. Hierzu verfügt das Fahrzeug über mehrere Fahrzeugkameras, die an unterschiedlichen Seiten der Fahrzeugkarosserie angebracht sind und Kamerabilder der Fahrzeugumgebung liefern. Eine Bilddatenverarbeitungseinheit des Fahrerassistenzsystems erzeugt aus den übermittelten Kamerabildern eine Fahrzeugumgebungsansicht bzw. einen Surround View, indem die Kamerabilder auf eine Projektionsfläche projiziert bzw. gemappt werden. Die Projektionsfläche ist üblicherweise eine dreidimensionale schalenförmige Oberfläche. Dabei geht man davon aus, dass die nähere Umgebung des Fahrzeugs einen annähernd flachen Untergrund aufweist. In vielen Fahrsituationen trifft dies allerdings nicht zu. Beispielsweise Baufahrzeuge und Forstfahrzeuge befinden sich oft in einer Fahrzeugumgebung, die unregelmäßig ausgeformt ist und beispielsweise Gräben, Schuttanhäufungen und Wände umfasst. Dies führt teilweise zu einem fehlerhaften Mapping bzw. Projektion der Kamerabilder auf die künstliche bzw. virtuelle Projektionsfläche, welche die tatsächliche Umgebung nicht widerspiegelt. Es kommt daher bei herkömmlichen Fahrerassistenzsystemen für derartige Fahrzeuge zu Bildverzerrungen der auf der Anzeigeeinheit angezeigten Fahrzeugumgebungsansicht.

Es ist daher eine Aufgabe der vorliegenden Erfindung, eine Vorrichtung und ein Verfahren zur Bereitstellung einer Fahrzeugumgebungsansicht für ein Fahrzeug zu schaffen, bei der die Bildqualität der angezeigten Fahrzeugumgebungsansicht erhöht wird.

Diese Aufgabe wird erfindungsgemäß durch die Merkmale der unabhängigen Patentansprüche gelöst.

Im Weiteren werden mögliche Ausführungsformen der erfindungsgemäßen Vorrichtung und des erfindungsgemäßen Verfahrens zur Bereitstellung einer Fahrzeugumgebungsansicht für ein Fahrzeug unter Bezugnahme auf die beigefügten Figuren näher erläutert.

Es zeigen:
- Figur 1: ein Blockschaltbild zur Darstellung eines Ausführungsbeispiels der erfindungsgemäßen Vorrichtung zur Bereitstellung einer Fahrzeugumgebungsansicht;
- Figur 2: eine schematische Darstellung eines Fahrzeugs, Welches die erfindungsgemäße Vorrichtung und das erfindungsgemäße Verfahren zur Bereitstellung einer Fahrzeugumgebungsansicht einsetzt;
- Figur 3A, 3B: eine beispielhafte Projektionsfläche, wie sie bei dem erfindungsgemäßen Verfahren zur Bereitstellung einer Fahrzeugumgebungsansicht eingesetzt werden kann;
- Figur 4: ein Anwendungsbeispiel der erfindungsgemäßen Vorrichtung und des erfindungsgemäßen Verfahrens zur Bereitstellung einer Fahrzeugumgebungsansicht;
- Figur 5: ein einfaches Ablaufdiagram zur Darstellung eines Ausführungsbeispiels des erfindungsgemäßen Verfahrens zur Bereitstellung einer Fahrzeugumgebungsansicht.

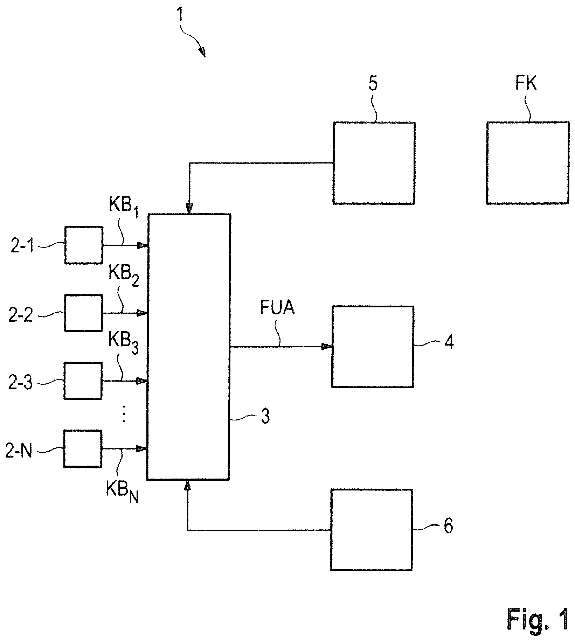

Wie man aus dem Blockschaltbild in Figur 1 erkennen kann, weist eine Vorrichtung 1 zur Bereitstellung einer Fahrzeugumgebungsansicht FUA für ein Fahrzeug F bei dem dargestellten Ausführungsbeispiel mehrere Kameras 2-1, 2-2, 2-3 ... 2-n auf, die Kamerabilder KB einer Fahrzeugumgebung des Fahrzeugs F erzeugen und über Signalleitungen an eine Bilddatenverarbeitungseinheit 3 liefern bzw. übertragen. Die Fahrzeugkameras 2-i können auf verschiedenen Seiten der Fahrzeugkarosserie des Fahrzeugs F angebracht sein und jeweils Kamerabilder KB der Fahrzeugumgebung liefern. Die Anzahl N der Fahrzeugkameras kann je nach Größe und Funktion des Fahrzeugs F variieren. Bei einer möglichen Ausführungsform sind die Fahrzeugkameras 2-i Fischaugenkameras mit einem Öffnungswinkel von mehr als 170°, vorzugsweise mehr als 175°. Die Bilddatenverarbeitungseinheit 3 weist einen oder mehrere Prozessoren auf, die eine Bilddatenverarbeitung der von den Fahrzeugkameras 2-i empfangenen Bilddaten ausführt. Die Bilddatenverarbeitungseinheit 3 passt eine Projektionsfläche PF auf Basis eines ermittelten Bewegungsraumes mindestens einer Fahrzeugkomponente FK des Fahrzeugs und/oder des gesamten Fahrzeugs F an. Auf diese angepasste Projektionsfläche PF' werden die von den Fahrzeugkameras 2-i gelieferten Kamerabilder bzw. Bilddaten zur Erzeugung der Fahrzeugumgebungsansicht FUA projiziert bzw. gemappt. Die erzeugte Fahrzeugumgebungsansicht FUA ist beispielsweise ein 360°-Surround View der Fahrzeugumgebung, die von der Bilddatenverarbeitungseinheit 3 zu einer Anzeigeeinheit 4 übertragen wird. Die Anzeigeeinheit 4 zeigt die erzeugte Fahrzeugumgebungsansicht FUA einem Fahrer des Fahrzeugs F optisch an.

Die Vorrichtung 1 zur Bereitstellung einer Fahrzeugumgebungsansicht FUA für ein Fahrzeug weist ferner eine Ermittlungseinheit 5 auf, welche den Bewegungsraum einer Fahrzeugkomponente FK oder des gesamten Fahrzeugs F ermittelt. Die Ermittlungseinheit 5 erfasst bei einer möglichen Ausführungsform Bewegungstrajektorien der Fahrzeugkomponente FK und ermittelt bzw. berechnet auf Basis der erfassten Bewegungstrajektorien den Bewegungsraum der jeweiligen Fahrzeugkomponente FK.

Figur 1 zeigt schematisch eine Fahrzeugkomponente FK des Fahrzeugs. Die Fahrzeugkomponente FK weist dabei vorzugsweise mindestens einen steuerbaren beweglichen Aktor auf. Durch Ansteuerung der Aktoren führt die Fahrzeugkomponente FK, die ihrerseits aus mehreren Bauteilen bestehen kann, eine oder mehrere überlagerte Bewegungstrajektorien in einem dreidimensionalen Bewegungsraum aus. Bei einer möglichen Ausführungsform weist die Fahrzeugkomponente FK ein Arbeitswerkzeug auf, das zur Durchführung von Arbeiten in dem Bewegungsraum der Fahrzeugumgebung gesteuert und bewegt wird. Bei einer möglichen Ausführungsform weist die Fahrzeugkomponente FK ferner einen hydraulisch betätigbaren Arm auf, an dem das jeweilige Arbeitswerkzeug AW befestigt ist. Dieses Arbeitswerkzeug AW hat bei einer möglichen Ausführungsform eine Schaufel zur Durchführung von Erdarbeiten in der Fahrzeugumgebung des Fahrzeugs.

Die Ermittlung des Bewegungsraumes der Fahrzeugkomponente FK durch die Ermittlungseinheit 5 kann auf unterschiedliche Weise erfolgen. Bei einer möglichen Ausführungsform wird der Bewegungsraum der Fahrzeugkomponente FK durch die Ermittlungseinheit 5 sensorisch erfasst. Alternativ kann der Bewegungsraum der Fahrzeugkomponente FK in Abhängigkeit von Steuerdaten erfolgen, die zur Ansteuerung der Aktoren der jeweiligen Fahrzeugkomponente FK dienen. Je nach Anwendungsfall kann es sich bei der Fahrzeugkomponente FK um unterschiedliche Bauteile bzw. Bauteilgruppen handeln. Die Fahrzeugkomponente FK verändert bei ihrer Betätigung vorzugsweise die Fahrzeugumgebung des Fahrzeugs. Beispielsweise kann mithilfe eines Baggerarms und einer daran angebrachten Schaufel ein Graben bzw. ein Loch in der unmittelbaren Fahrzeugumgebung des Fahrzeugs F ausgegraben bzw. ausgehoben werden. Ein anderes Beispiel ist eine Holzerntemaschine, bei der Baumstämme oder Äste von Bäumen, die in der unmittelbaren Umgebung der Holzerntemaschine stehen, mittels eines Sägewerkzeuges abgesägt und entfernt werden. Indem die Fahrzeugkomponente FK in einem dreidimensionalen Bewegungsraum bewegt und betätigt wird, verändert sie somit die unmittelbare Fahrzeugumgebung des Fahrzeugs. Die Bilddatenverarbeitungseinheit 3 passt auf Basis dieses ermittelten Bewegungsraumes eine virtuelle Projektionsfläche PF an, auf welche die von den Fahrzeugkameras 2-i gelieferten Kamerabilder KB zur Erzeugung der Fahrzeugumgebungsansicht FUA projiziert werden. Die angepasste Projektionsfläche PF' spiegelt somit die stattgefundene Veränderung der Fahrzeugumgebung aufgrund des durch die Fahrzeugkomponente FK durchgeführten Eingriffs unmittelbar wider. Dies hat zur Folge, dass Bildverzerrungen aufgrund der sich dynamisch verändernden Fahrzeugumgebung bei der Projektion reduziert bzw. verhindert werden, sodass die Qualität der auf der Anzeigeeinheit 4 angezeigten Fahrzeugumgebungsansicht FUA deutlich erhöht wird.

Bei einer möglichen Ausführungsform sind der angezeigten Fahrzeugumgebungsansicht FUA zusätzlich Informationen für den Fahrer überlagert. Beispielsweise wird in der auf der Anzeigeeinheit 4 dargestellten Fahrzeugumgebungsansicht die zukünftig erwartete Bewegungstrajektorie des Fahrzeugs dargestellt, welche das Fahrzeug F bei dem derzeitigen Lenkwinkel voraussichtlich nehmen wird. Weiterhin können beispielsweise zur Steigerung der realistischen Bilddarstellung (Augmented Reality) zusätzliche Informationen hinsichtlich der Bodenbeschaffenheit überlagert angezeigt werden. Weiterhin können in einer Überlagerungsansicht zusätzliche Informationen angezeigt werden, beispielsweise die Lage von Versorgungsleitungen in der Fahrzeugumgebung, insbesondere Gas- und Wasserleitungen. Die Qualität und Genauigkeit dieser überlagerten Informationen wird durch die erfindungsgemäße Vorrichtung und das erfindungsgemäße Verfahren zur Bereitstellung einer Fahrzeugumgebungsansicht FUA ebenfalls deutlich gesteigert, da die dargestellte Fahrzeugumgebungsansicht aufgrund der angepassten Projektionsfläche PF weniger verzerrt und deutlich genauer ist. Hierdurch wird die Vornahme von Arbeiten in der Fahrzeugumgebung des Fahrzeugs erleichtert und die Sicherheit gegenüber fehlerhaften Eingriffen in der Fahrzeugumgebung des Fahrzeugs F vermindert. Beispielsweise wird die Gefahr, dass durch vorgenommene Erdarbeiten eine Gas- oder Wasserleitung in der unmittelbaren Fahrzeugumgebung beschädigt wird, aufgrund der gesteigerten Bildqualität der Fahrzeugumgebungsansicht FUA vermindert. Bei einer möglichen Ausführungsform wird der Bewegungsraum der mindestens einen Fahrzeugkomponente FK, beispielsweise eines Baggerarms mit daran befestigter Baggerschaufel, von den Steuerdaten abgeleitet, die Aktoren zur Bewegung der Fahrzeugkomponente FK steuern. Bei dieser Ausführungsform berechnet die Ermittlungseinheit den Bewegungsraum der Fahrzeugkomponente FK auf Basis der abgegriffenen Steuerdaten. Diese Ausführungsform bietet den Vorteil, dass keine zusätzlichen Sensoren zur sensorischen Erfassung des Bewegungsraumes der Fahrzeugkomponente FK vorgesehen werden müssen. Weiterhin bietet die erfindungsgemäße Vorrichtung und das erfindungsgemäße Verfahren den Vorteil, dass zur Erzeugung der qualitativ verbesserten Fahrzeugumgebungsansicht FUA keine dreidimensionale Karte der Fahrzeugumgebung erforderlich ist. Darüber hinaus berücksichtigt die erfindungsgemäße Vorrichtung und das erfindungsgemäße Verfahren die vorgenommenen Veränderungen in der Fahrzeugumgebung direkt bzw. unmittelbar.

Bei einer weiteren möglichen Ausführungsform der erfindungsgemäßen Vorrichtung 1 wird durch die Bilddatenverarbeitungseinheit 3 die virtuelle Projektionsfläche PF zusätzlich in Abhängigkeit von Navigationsdaten und/oder Raumdaten angepasst, welche die Bilddatenverarbeitungseinheit 3 von einem Navigationssystem 6 des Fahrzeugs und/oder von einem benachbarten Fahrzeug erhält. Bei einer möglichen Ausführungsform liefert ein Navigationssystem 6 des Fahrzeugs zusätzlich Positions- bzw. Raumdaten, die bei der Anpassung der Projektionsfläche PF durch die Bilddatenverarbeitungseinheit 3 berücksichtigt werden. Bei einer weiteren möglichen Ausführungsform können derartige Positions- bzw. Raumdaten auch von einem Empfänger des Fahrzeugs von einem benachbarten Fahrzeug, beispielsweise einem anderen Baufahrzeug, empfangen werden. Auf einer Großbaustelle, die beispielsweise viele ausgehobene Gräben oder Aufschüttungen aufweist, ist es somit möglich, dass verschiedene Baufahrzeuge, beispielsweise Bagger oder Planierraupen, miteinander Bewegungsraumdaten, Navigationsdaten oder Positionsdaten austauschen, um ein einheitliches Bild der Großbaustelle zu gewinnen.

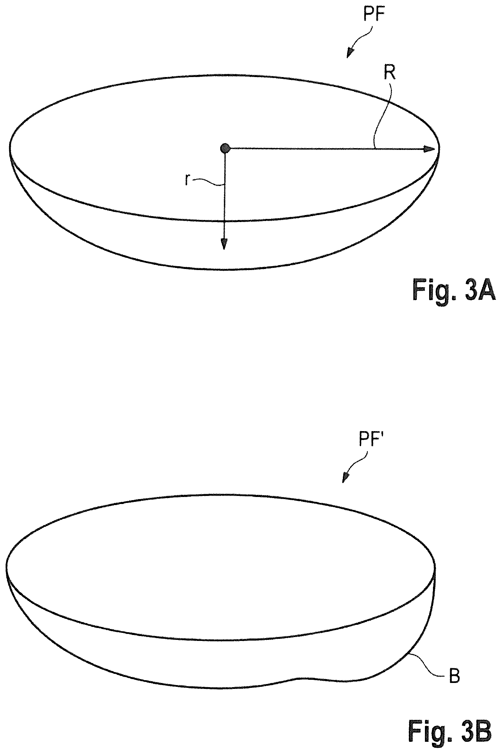

Die von der Datenverarbeitungseinheit 3 zur Projektion verwendete virtuelle Projektionsfläche PF ist bei einer möglichen Ausführungsform eine schalenförmige Projektionsfläche. Je nach Anwendungsfall können auch andersartige Projektionsflächen eingesetzt werden, beispielsweise ellipsenförmige Projektionsflächen oder planare Projektionsflächen. Die Projektionsfläche wird vorzugsweise in Abhängigkeit von dem erfassten Bewegungsraum der Fahrzeugkomponente FK oder des gesamten Fahrzeugs dynamisch angepasst. Dabei passt die Bilddatenverarbeitungseinheit 3 die Projektionsfläche ausgehend von einer ursprünglichen Projektionsfläche in Abhängigkeit von dem ermittelten Bewegungsraum der Fahrzeugkomponente FK und/oder des gesamten Fahrzeugs dynamisch an. Dies geschieht vorzugsweise bei einer sensorisch erfassten Bewegung der Fahrzeugkomponente FK oder des gesamten Fahrzeugs. Bei einer möglichen Ausführungsform ist die ursprüngliche Projektionsfläche eine schalenförmige Projektionsfläche, die in Abhängigkeit von dem erfassten Bewegungsraum der Fahrzeugkomponente FK und/oder des Fahrzeugs durch die Datenverarbeitungseinheit geometrisch verformt wird. Beispielsweise kann die Projektionsfläche PF durch die Datenverarbeitungseinheit entsprechend dem ermittelten Bewegungsraum eingedellt oder ausgebeult werden, wie dies schematisch in den Figuren 3A, 3B dargestellt ist.

Die Bewegungstrajektorien der beweglichen Fahrzeugkomponenten FK, beispielsweise von Baggerarmen oder Frontladern, werden bei der erfindungsgemäßen Vorrichtung und dem erfindungsgemäßen Verfahren verwendet, um zusätzliche Informationen bzw. Daten der Fahrzeugumgebung über die Zeit zu gewinnen. Falls beispielsweise ein Bagger ein Loch oder einen Graben in der unmittelbaren Fahrzeugumgebung des Fahrzeugs F gräbt, greift der Baggerarm unterhalb der normalen Fahrebene FE des Fahrzeugs F. Da bei Baufahrzeugen die aktuelle Position und Lage der Fahrzeugkomponente FK bzw. des Baggerarmes stets bekannt ist, kann diese Fahrzeugkomponente FK somit gewissermaßen als Sensoreinheit verwendet werden, um ein Bewegungsraum zu ermitteln. Auf Basis der durch den Arm erreichten Positionen kann die Form und Beschaffenheit der Fahrumgebung, insbesondere des durch das Fahrzeug F befahrenen Fahrgrundes, im Laufe der Zeit ermittelt und fortlaufend verfeinert werden. Diese Daten können zusätzlich dafür benutzt werden, die Bewegung des Fahrzeugs F über den Fahrgrund zu optimieren. Falls das Fahrzeug beispielsweise eine ungleichmäßig ausgeformte Oberfläche bzw. Fahrgrund passiert, kann dies durch ein globales Navigationssatellitensystem detektiert bzw. erfasst werden, wobei beispielsweise empfangene GPS-Daten durch die Datenverarbeitungseinheit 3 bei der Anpassung der Projektionsfläche PF mitberücksichtigt werden. Um die Bildqualität und den abgedeckten Umgebungsbereich zu erhöhen, können die gewonnenen Informationsdaten, insbesondere die Daten hinsichtlich des Bewegungsraumes der Fahrzeugkomponente FK, die Navigationsdaten sowie die Raumdaten, zwischen verschiedenen Fahrzeugen bzw. Baumaschinen, die sich auf derselben Baustelle befinden, ausgetauscht bzw. geteilt werden. Hierzu weisen die Fahrzeuge bzw. Baumaschinen vorzugsweise Transceiver auf, um entsprechende Informationsdaten über eine Luftschnittstelle miteinander auszutauschen. Dies kann vorzugsweise über einen dezidierten Übertragungskanal geschehen. Bei einer weiteren möglichen Ausführungsform werden die gewonnenen Informationsdaten, d.h. die Bewegungsraumdaten, die Positionsdaten sowie die Navigationsdaten der verschiedenen Fahrzeuge, an einen zentralen Rechner Z übertragen, welcher aus den empfangenen Informationsdaten ein Gesamtdatenmodell der Großbaustelle BS generiert und fortlaufend auf Basis der empfangenen Informationsdaten updatet. Dieses Baustellendatenmodell wird bei einer möglichen Ausführungsform mit einem bestehenden Datenmodell der Baustelle abgeglichen, sodass stets der Fortgang bzw. die Veränderung der Baustelle BS be-obachtet werden können.

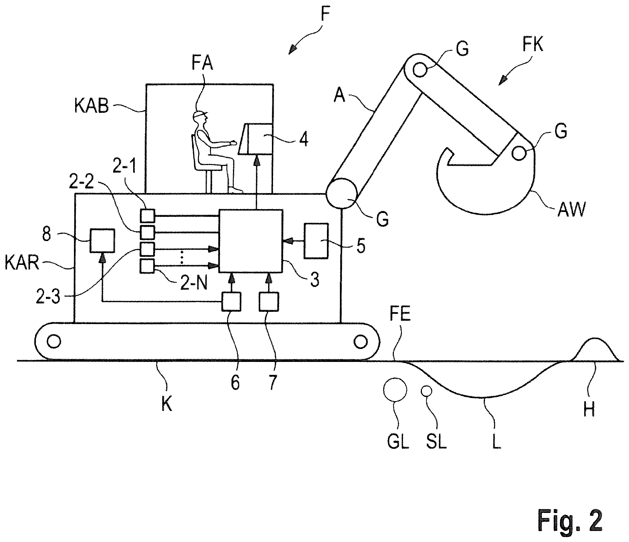

Figur 2 zeigt schematisch ein Ausführungsbeispiel für ein Fahrzeug F, bei dem die erfindungsgemäße Vorrichtung 1 und das erfindungsgemäße Verfahren zur Bereitstellung einer Fahrzeugumgebungsansicht FUA eingesetzt werden. Bei dem dargestellten Beispiel handelt es sich um ein Baufahrzeug, insbesondere um einen Bagger, zur Durchführung von Erdarbeiten. Der dargestellte Bagger ist ein Kettenfahrzeug mit einem Kettenantrieb K, der eine Fahrzeugkarosserie KAR des Fahrzeugs trägt. Weiterhin verfügt das Fahrzeug F über eine Fahrerkabine KAB, in der ein Fahrer FA sitzt und das Fahrzeug F lenkt bzw. steuert. Der in Figur 2 dargestellte Bagger verfügt über eine steuerbare Fahrzeugkomponente FK zur Durchführung von Arbeiten in der Fahrzeugumgebung des Fahrzeugs. Bei dem dargestellten Ausführungsbeispiel weist die Fahrzeugkomponente FK einen hydraulisch betätigbaren Arm A auf, an dem ein Arbeitswerkzeug AW befestigt ist. Bei dem dargestellten Ausführungsbeispiel handelt es sich bei dem Arbeitswerkzeug AW um eine Schaufel zur Durchführung von Erdarbeiten in der Fahrzeugumgebung. Zur Bewegung der Fahrzeugkomponente FK sind steuerbare bewegliche Aktoren vorgesehen, die beispielsweise den Arm der Fahrzeugkomponente FK hydraulisch antreiben. Wie in Figur 2 schematisch dargestellt, verfügt die Fahrzeugkomponente FK über eine oder mehrere Gelenke G zur Bewegung der verschiedenen Bauteile der Fahrzeugkomponente FK relativ zueinander. Figur 2 zeigt ferner schematisch eine Fahrebene bzw. einen Fahrgrund FE, der im Wesentlichen horizontal verläuft. Das Fahrzeug F gräbt in dem dargestellten Anwendungsbeispiel mithilfe seiner Fahrzeugkomponente bzw. einer Baggerschaufel einen Graben bzw. ein Loch L in die Fahrebene FE. Hierzu wird das Arbeitswerkzeug bzw. die Schaufel AW auf den Fahrgrund bzw. die Fahrebene aufgesetzt und derart angesteuert, dass Erdmaterial ausgehoben wird. Das ausgehobene Erdmaterial wird in dem dargestellten Beispiel neben dem Loch aufgeschüttet und bildet einen entsprechenden Hügel H. Durch die vorgenommenen Erdarbeiten verändert sich die unmittelbare

Fahrzeugumgebung des Fahrzeugs, d.h., aus der relativ glatten ursprünglichen Fahrebene FE entsteht vor dem Bagger F eine unregelmäßig ausgeformte Oberfläche mit einem Loch L und einem Hügel H. Bei der Durchführung der Erdarbeiten führt die Fahrzeugkomponente FK mit jeder Schaufelbewegung eine Bewegung entlang einer gesteuerten Bewegungstrajektorie durch. Durch die Vielzahl der vorgenommenen Bewegungen bzw. Bewegungstrajektorien wird ein Bewegungsraum der Fahrzeugkomponente FK aufgespannt, der durch die Ermittlungseinheit 5 der Vorrichtung 1 ermittelt wird. Bei einer möglichen Ausführungsform ermittelt die Ermittlungseinheit 5 den dreidimensionalen Bewegungsraum der Fahrzeugkomponente FK auf Basis von Steuerdaten, die beispielsweise über einen Fahrzeugbus einer Steuereinheit zu Aktoren der Fahrzeugkomponente FK übertragen werden. Alternativ oder zusätzlich kann die Ermittlungseinheit 5 auch über Sensoren verfügen, welche sensorisch die Bewegung der Fahrzeugkomponente FK bei Durchführung der Arbeiten erfasst. Beispielsweise kann die Ermittlungseinheit 5 einen optischen Sensor aufweisen, um Bewegungen bzw. Bewegungstrajektorien der Fahrzeugkomponente FK während der Durchführung der Erdarbeiten zu erfassen, um daraus einen Bewegungsraum der Fahrzeugkomponente FK zu berechnen. Bei dem in Figur 2 dargestellten Ausführungsbeispiel verfügt die Vorrichtung 1 ferner über einen Sensor 7, um die Bewegung des gesamten Fahrzeugs F zu erfassen. Bei dem in Figur 2 dargestellten Ausführungsbeispiel liefert ferner ein Navigationssystem 6 des Fahrzeugs F zusätzlich Navigations- bzw. Positionsdaten an die Datenverarbeitungseinheit 3 zur Anpassung der Projektionsfläche PF. Die in Figur 2 dargestellten N Fahrzeugkameras 2-i können an verschiedenen Seiten der Fahrzeugkarosserie KAR angebracht sein und liefern kontinuierlich Kamerabilder bzw. Bildrahmen KB an die Datenverarbeitungseinheit 3 zur Datenauswertung. Die von der Datenverarbeitungseinheit 3 generierte Fahrzeugumgebungsansicht FUA wird an die Anzeigeeinheit 4 innerhalb der Fahrerkabine KAB übermittelt. Die auf der Anzeigeeinheit 4 dargestellte Fahrzeugumgebungsansicht unterstützt den Fahrer FA bei der Durchführung der Arbeiten in der Fahrzeugumgebung. Aufgrund der dynamisch angepassten Projektionsfläche erhält der Fahrer FA eine realistische und weitgehend verzerrungsfreie Ansicht der gesamten Fahrzeugumgebung. Bei dem in Figur 2 dargestellten Ausführungsbeispiel verfügt die Vorrichtung 1 ferner über einen Transceiver 8 zum Austauschen von Daten mit weiteren Fahrzeugen oder einem Access Point in der Fahrzeugumgebung.

Figuren 3A, 3B zeigen beispielhaft eine schalenförmige Projektionsfläche PF, wie sie bei der Datenverarbeitung durch die Bilddatenverarbeitungseinheit 3 der erfindungsgemäßen Vorrichtung und des erfindungsgemäßen Verfahrens verwendet werden kann. Bei dem dargestellten Beispiel ist in Figur 3A eine ursprüngliche schalenförmige Projektionsfläche PF schematisch dargestellt. Bei dem dargestellten Ausführungsbeispiel weist die schalenförmige Projektionsfläche PF einen äußeren Radius R und einen etwas größeren inneren Radius r auf. Bei einer möglichen Ausführungsform ist die Projektionsfläche PF in einer internen Datenspeichereinheit der Datenverarbeitungseinheit 3 abgespeichert und kann durch einen Prozessor der Datenverarbeitungseinheit 3 aus diesem Datenspeicher zur Anpassung ausgelesen werden. Die Bilddatenverarbeitungseinheit 3 kann ausgehend von der ursprünglichen Projektionsfläche PF, wie sie in Figur 3A dargestellt ist, bei einer sensorisch erfassten Bewegung der Fahrzeugkomponente FK oder bei einer Bewegung des gesamten Fahrzeugs F in Abhängigkeit von dem durch die Ermittlungseinheit 5 ermittelten Bewegungsraum der Fahrzeugkomponente FK und/oder der Bewegung des Fahrzeugs F die virtuelle Projektionsfläche PF dynamisch anpassen. Dabei wird die ursprüngliche schalenförmige Projektionsfläche PF in Abhängigkeit von dem erfassten Bewegungsraum geometrisch verformt. Beispielsweise kann die Projektionsfläche PF ausgebeult werden, wie in Figur 3B schematisch dargestellt, und bildet eine angepasste Projektionsfläche PF'. Gräbt beispielsweise die Baumaschine F, wie sie in Figur 2 dargestellt ist, ein Loch L in den vor ihr befindlichen Baugrund, spiegelt sich dieses Loch in einer entsprechenden Ausbeulung B der Projektionsfläche PF' wider. Die schalenförmige Projektionsfläche PF wird somit an die ungleichmäßige Oberfläche der Fahrzeugumgebung angepasst. Die ungleichmäßige Oberfläche der Fahrzeugumgebung wird dabei aus dem Bewegungsraum bzw. den Bewegungstrajektorien der Fahrzeugkomponente FK abgeleitet. Bei einer möglichen Ausführungsform ermittelt die Ermittlungseinheit 5, dass sich das Arbeitswerkzeug bzw. die Schaufel AW unterhalb des normalen Bodenniveaus FE befindet. Die Ermittlungseinheit 5 kann daraus den Bewegungsraum der Fahrzeugkomponente FK bzw. deren Arbeitswerkzeug AW unterhalb des Referenzniveaus FE ermitteln. Dieser Bewegungsraum entspricht im Wesentlichen dem Volumen des gegrabenen Loches L, wie es in Figur 2 dargestellt ist. Die Ausformung der Projektionsfläche PF', insbesondere die Ausbeulung B, entspricht dabei in ihrem Umfang der Größe des ermittelten Bewegungsraumes bzw. der Größe des gegrabenen Loches L.

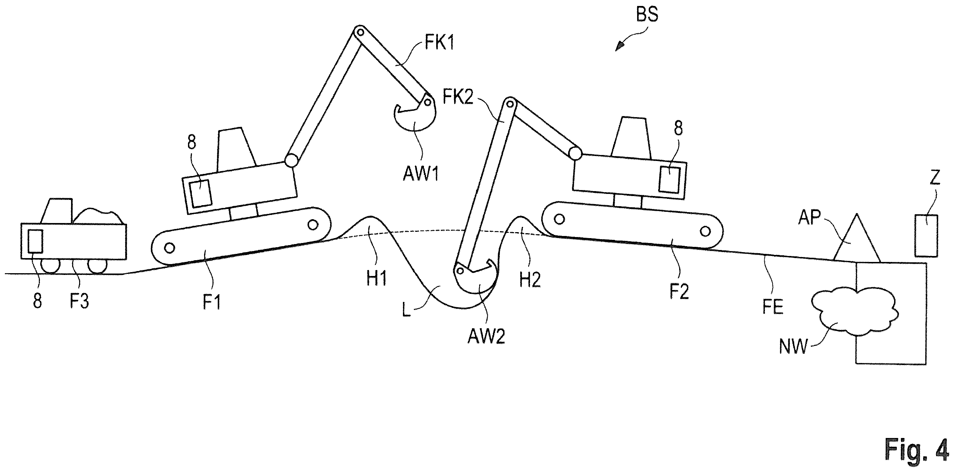

Figur 4 zeigt schematisch einen Anwendungsfall, bei dem mehrere Fahrzeuge F1, F2 bei Aushubarbeiten, beispielsweise auf einer Großbaustelle BS, zusammenarbeiten. Die beiden Baufahrzeuge F1, F2 stehen auf einer Fahrebene bzw. Fahrgrund und heben gemeinsam ein Loch L mit ihren Arbeitswerkzeugen bzw. Schaufeln AW1, AW2 aus. Dabei bilden sich Aufschüttungen H1, H2 vor den jeweiligen Baggern F1, F2. Bei dem dargestellten Ausführungsbeispiel verfügen beide Baufahrzeuge F1, F2 über eine Vorrichtung 1 zur Bereitstellung einer Fahrzeugumgebungsansicht FUA für das jeweilige Fahrzeug F1, F2. Die beiden Fahrzeuge F1, F2 verfügen jeweils über Transceiver 8 zum Austausch von Informationsdaten zwischen den jeweiligen Vorrichtungen 1 zur Bereitstellung einer Fahrzeugumgebungsansicht FUA über eine Luftschnittstelle. Die beiden Fahrzeuge F1, F2 können somit entweder direkt oder indirekt, beispielsweise über einen Satelliten oder über ein drittes Fahrzeug miteinander kommunizieren und relevante Daten, insbesondere Bewegungsraumdaten, Raumdaten, Positionsdaten oder Navigationsdaten, miteinander in Echtzeit austauschen. Gräbt beispielsweise ein Fahrzeug F2 mit seiner unterhalb des normalen Bodenniveaus FE befindlichen Schaufel AW2 ein Loch L, das sich vor dem anderen Fahrzeug F1 befindet, kann es die momentan ermittelten Bewegungsraumdaten der Bewegung der Schaufel AW2 innerhalb des Loches L über die Kommunikationsluftschnittstelle an den Transceiver 8 des Fahrzeugs F1 übertragen, welcher die Informationsdaten an das Navigationssystem 6 des Fahrzeugs F1 sowie an die Datenverarbeitungseinheit 3 innerhalb des Fahrzeugs F1 übermittelt. Zusammen mit Bewegungsraumdaten kann das Fahrzeug F2 zudem seine aktuellen Positionsdaten bzw. Ortskoordinaten über die Luftschnittstelle an den Transceiver 8 des Fahrzeugs F1 übermitteln, sodass die Bilddatenverarbeitungseinheit 3 der Vorrichtung 1 innerhalb des Fahrzeugs F1 die Relativposition des Fahrzeugs F2 zu dem Fahrzeug F1 ableiten kann und somit die genaue Lage des gegrabenen Loches L vor dem Fahrzeug F1 berechnen kann. Die Bilddatenverarbeitungseinheit 3 der Bereitstellungsvorrichtung 1 innerhalb des Fahrzeugs F1 kann dann auf Basis des von dem Fahrzeug F1 und auf Basis der von dem Fahrzeug F2 über die Kommunikationsschnittstelle empfangenen Bewegungsraumdaten der Fahrzeugkomponente FK2 und/oder der momentanen Bewegungen der beiden Fahrzeuge F1, F2 die entsprechende Projektionsfläche PF in Echtzeit anpassen, auf welche die von den Fahrzeugkameras 2-i des Fahrzeugs F1 gelieferten Kamerabilder KB zur Erzeugung der Fahrzeugumgebungsansicht FUA projiziert werden. Beispielsweise kann die verwendete Projektionsfläche PF, wie in den Figuren 3A, 3B schematisch dargestellt, entsprechend dem gegrabenen Loch L ausgebeult werden. Die beiden Baufahrzeuge F1, F2 können mit weiteren Baufahrzeugen auf der Baustelle BS, beispielsweise einem Lkw F3, zum Abtransport von Schüttgut kommunizieren. Beispielsweise kann das Fahrzeug F3 zu demjenigen Bagger geleitet werden, welcher gerade Baumaterial aus dem Loch L heraushebt. Bei dem in Figur 4 dargestellten Szenario kann beispielsweise der Lkw F3 zu dem momentan ausgrabenden Bagger F2 geleitet werden, um Schüttgut aus dem ausgegrabenen Loch L aufzunehmen. Die Bewegungsraumdaten, welche den Bewegungsraum der Schaufel AW2 unterhalb des Bodenniveaus FE angeben, spiegeln somit das ausgehobene Loch L wider. Bei einer möglichen Ausführungsform können die Bewegungsraumdaten bei der Steuerung bzw. Lenkung eines weiteren Fahrzeugs F3 mitberücksichtigt werden. Beispielsweise kann ein Fahrer des Lkws F3 die Lage und Form des Loches L auf Basis der Bewegungsraumdaten angezeigt erhalten, sodass er bei seiner Bewegung auf der Baustelle ausgehend von seiner Ausgangsposition hin zu dem Fahrzeug F2 dieses ausgehobene Loch L umfährt.

Bei einer möglichen Ausführungsform können die Bewegungsraumdaten, die Positionsdaten, die Navigationsdaten sowie weitere Sensordaten der verschiedenen auf der Baustelle BS befindlichen Fahrzeuge F1, F2, F3 über einen Access Point AP und ein Datennetzwerk NW oder per Satellit an einen zentralen Rechner Z übermittelt werden, der die Zusammenarbeit der verschiedenen Fahrzeuge F auf der Baustelle BS koordiniert. Der zentrale Rechner Z kann sich direkt auf der Baustelle BS befinden oder entfernt in einem Datenverarbeitungszentrum. Mit den empfangenen Daten, insbesondere den Bewegungsraumdaten und den Positionsdaten der Fahrzeuge F1, lässt sich bei einer möglichen Ausführungsform ein dreidimensionales Datenmodell des aktuellen Bodenniveaus FE der Baustelle BS in Echtzeit errechnen. Auf diese Weise verfügt die Bauleitung während des Baufortschritts stets über ein aktuelles Datenmodell des Bodenniveaus FE und kann somit den Baufortschritt zuverlässig beobachten und notwendige Maßnahmen durchführen. Bei einer möglichen Ausführungsform wird das berechnete Datenmodell des Bodenniveaus FE der Gesamtbaustelle BS über eine Nutzerschnittstelle an einen Baustellenleiter der Baustelle angezeigt. Auf diese Weise erhält der Bauleiter in Echtzeit ein Höhenprofil der Baustelle BS mit gegrabenen Löchern, Gräben oder Aufschüttungen H1, H2. Bei einer weiteren möglichen Ausführungsform besteht bei dem in Figur 4 beispielhaft dargestellten System die Möglichkeit, dass die verschiedenen Fahrzeuge F1, F2, F3 stets ihre jeweils erzeugten Fahrzeugumgebungsansichten FUAs über den Access Point AP und das Netzwerk an den Zentralrechner Z übertragen, sodass der Baustellenleiter die Möglichkeit hat, die verschiedenen Fahrzeugumgebungsansichten FUAs in Echtzeit auf einem Bildschirm während des Baufortschrittes zu beobachten. Er kann sich auf diese Weise in die jeweilige individuelle Situation des in dem Fahrzeug F befindlichen Fahrers FA versetzen und die Baumaßnahmen koordinieren.

Bei einer weiteren möglichen Ausführungsform können die von den verschiedenen Fahrzeugen F gelieferten Bewegungsraumdaten zusätzlich ausgewertet werden, um weitere relevante Informationen zu erhalten. Beispielsweise entspricht der ermittelte Bewegungsraum eines Arbeitswerkzeugs AW unterhalb des normalen Bodenniveaus FE annähernd dem ausgehobenen Bauvolumen bzw. der ausgehobenen Baumaterialmenge. Bei einer möglichen Ausführungsform wird somit auf Basis des ermittelten Bewegungsraumes die ausgehobene Baumaterialmenge berechnet. Übertrifft die ermittelte Baumaterialmenge einen Schwellenwert, kann beispielsweise ein weiteres Fahrzeug, insbesondere der in Figur 4 dargestellte Lkw, zu dem ausgehobenen Loch L geführt werden, um das aufgeschüttete Baumaterial abzutransportieren. Auf diese Weise kann der Einsatz von Fahrzeugen F auf der Baustelle, insbesondere der Abtransport von Baumaterial, optimiert werden.

Die Erfindung schafft demnach gemäß einem weiteren Aspekt ein System zur Koordinierung von Arbeiten innerhalb eines bestimmten Gebietes, beispielsweise einer Baustelle BS, mit mehreren kooperierenden Fahrzeugen F1, F2, F3, die jeweils über ein Fahrerassistenzsystem, wie es in Figur 2 dargestellt ist, verfügen. Dabei dient ein Transceiver 8 zur Kommunikation mit anderen Fahrerassistenzsystemen benachbarter Fahrzeuge und/oder zur Kommunikation mit einem Zentralrechner Z.

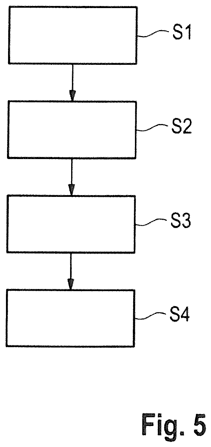

Figur 5 zeigt ein Ablaufdiagramm einer möglichen Ausführungsform des erfindungsgemäßen Verfahrens zum Erzeugen einer Fahrzeugumgebungsansicht FUA für ein Fahrzeug F. In einem ersten Schritt S1 werden Kamerabilder KB einer Fahrzeugumgebung des Fahrzeugs bereitgestellt. Anschließend wird in einem Schritt S2 ein Bewegungsraum mindestens einer Fahrzeugkomponente FK des Fahrzeugs und/oder des gesamten Fahrzeugs ermittelt. Daraufhin wird eine virtuelle Projektionsfläche PF durch eine Bilddatenverarbeitungseinheit in Abhängigkeit des ermittelten Bewegungsraumes im Schritt S3 angepasst. Schließlich werden im Schritt S4 die bereitgestellten Kamerabilder KB auf die angepasste Projektionsfläche zur Erzeugung der Fahrzeugumgebungsansicht des Fahrzeugs projiziert. Die erzeugte Fahrzeugumgebungsansicht FUA wird über eine Anzeigeeinheit dem Fahrer FA des Fahrzeugs F optisch angezeigt. Vorzugsweise wird ein dreidimensionaler Bewegungsraum der Fahrzeugkomponente auf Basis von erfassten Bewegungstrajektorien der mittels Aktoren bewegten Fahrzeugkomponente FK im Schritt S2 ermittelt.

Das in Figur 5 dargestellte Verfahren wird vorzugsweise in Echtzeit durch einen oder mehrere Mikroprozessoren ausgeführt.

Weitere Ausführungsformen sind möglich. Bei einer möglichen Ausführungsform werden die berechneten Fahrzeugumgebungsansichten FUAs, welche dem Fahrer des Fahrzeugs auf seinem Display angezeigt werden, in einem Datenspeicher aufgezeichnet. Werden beispielsweise bei Aushubarbeiten Infrastruktureinrichtungen, beispielsweise Gas- oder Wasserleitungen, beschädigt, können die Fahrzeugumgebungsansichten FUAs der daran beteiligten Baufahrzeuge F ausgewertet werden, um die Ursache der Beschädigung herauszufinden. Bei einer weiteren möglichen Ausführungsform werden die Bewegungstrajektorien der Fahrzeugkomponenten FK, insbesondere der darin vorgesehenen Arbeitswerkzeuge AW, ausgewertet, um festzustellen, ob sich verschiedene Infrastruktureinrichtungen, beispielsweise Wasser- oder Stromleitungen, die im Fahrgrund verlegt sind, zu sehr annähern. Nähert sich beispielsweise die Schaufel AW des Fahrzeugs F zu sehr der in Figur 2 dargestellten Gasleitung GL oder der Stromleitung SL während der Grabungsarbeiten an, kann dies dem Fahrer FA auf dem Display angezeigt werden, beispielsweise mittels einer Warnmeldung oder dergleichen. Die erfindungsgemäße Vorrichtung 1 und das erfindungsgemäße Verfahren eignen sich für beliebige Fahrzeuge, die aktiv in ihre Fahrzeugumgebung eingreifen, insbesondere Baufahrzeuge, Landmaschinenfahrzeuge oder Forstfahrzeuge.

### BEZUGSZEICHEN

- 1: Vorrichtung zur Bereitstellung einer Fahrzeugumgebungsansicht
- 2: Fahrzeugkameras
- 3: Datenverarbeitungseinheit
- 4: Anzeigeeinheit
- 5: Ermittlungseinheit
- 6: Navigationssystem
- 7: Sensoren
- 8: Transceiver
- A: Arm
- AP: Access Point
- AW: Arbeitswerkzeug
- BS: Baustelle
- F: Fahrzeug
- FA: Fahrer
- FK: Fahrzeugkomponente
- G: Gelenk
- GL: Gasleitung
- H: Schutthügel
- L: Grabungsloch
- NW: Netzwerk
- SL: Stromleitung
- Z: Zentralrechner

## Patentansprüche

1. Fahrzeug (F), mit:
mindestens einer Fahrzeugkomponente (FK), wobei die Fahrzeugkomponente (FK) des Fahrzeugs (F) mindestens einen steuerbaren beweglichen Aktor aufweist, und
einer Vorrichtung (1) zur Bereitstellung einer Fahrzeugumgebungsansicht (FUA) für das Fahrzeug (F) mit:
- Fahrzeugkameras (2), die eingerichtet sind, Kamerabilder (KB) einer Fahrzeugumgebung (FUA) des Fahrzeugs (F) zu liefern;
- einer Ermittlungseinheit (5), die dazu eingerichtet ist, den Bewegungsraum mindestens einer Fahrzeugkomponente (FK) des Fahrzeugs (F) zu ermitteln; und mit
- einer Bilddatenverarbeitungseinheit (3), welche eingerichtet ist, auf Basis des ermittelten Bewegungsraumes der mindestens einen Fahrzeugkomponente (FK) des Fahrzeugs (F) eine Projektionsfläche (PF) anzupassen, auf welche die von den Fahrzeugkameras (2) gelieferten Kamerabilder (KB) zur Erzeugung der Fahrzeugumgebungsansicht (FUA) projiziert werden,
**dadurch gekennzeichnet dass**, die Ermittlungseinheit (5), dazu eingerichtet ist, den Bewegungsraum der mindestens einen Fahrzeugkomponente (FK) des Fahrzeugs (F) in Abhängigkeit von Steuerdaten, die zur Ansteuerung der Aktoren der jeweiligen Fahrzeugkomponente (FK) dienen, zu ermitteln.

2. Fahrzeug (F)nach Anspruch 1,
wobei die Fahrzeugkomponente (FK) ein Arbeitswerkzeug (AW) aufweist, das zur Durchführung von Arbeiten in einem Bewegungsraum der Fahrzeugumgebung bewegbar ist.

3. Fahrzeug (F)nach Anspruch 2,
wobei die Fahrzeugkomponente (FK) einen hydraulisch betätigbaren Arm (A) aufweist, an dem das Arbeitswerkzeug (AW) befestigt ist.

4. Fahrzeug (F)nach Anspruch 2 oder 3,
wobei das Arbeitswerkzeug (AW) der Fahrzeugkomponente (FK) eine Schaufel zur Durchführung von Erdarbeiten in der Fahrzeugumgebung des Fahrzeugs (F) aufweist.

5. Fahrzeug (F)nach einem der Ansprüche 1 bis 4,
wobei die Ermittlungseinheit (5) ausgelegt ist, Bewegungstrajektorien der Fahrzeugkomponente (FK) zu erfassen und auf Basis der erfassten Bewegungstrajektorien den Bewegungsraum der Fahrzeugkomponente (FK) zu ermitteln.

6. Fahrzeug (F)nach einem der vorangehenden Ansprüche 1 bis 5,
wobei die Bilddatenverarbeitungseinheit (3) eingerichtet ist, die Projektionsfläche (PF) zusätzlich in Abhängigkeit von Navigationsdaten und/oder Raumdaten anzupassen, die die Bilddatenverarbeitungseinheit (3) von einem Navigationssystem (6) des Fahrzeugs (F) und/oder von einem benachbarten Fahrzeug erhält.

7. Fahrzeug (F)nach einem der vorangehenden Ansprüche 1 bis 6,
wobei die Projektionsfläche (PF) eine schalenförmige Projektionsfläche ist, die in Abhängigkeit von dem erfassten Bewegungsraum der Fahrzeugkomponente (FK) angepasst wird.

8. Fahrzeug (F)nach einem der vorangehenden Ansprüche 1 bis 7,
wobei die Bilddatenverarbeitungseinheit (3) eingerichtet ist, die Projektionsfläche (PF) ausgehend von einer ursprünglichen Projektionsfläche (PF) bei einer sensorisch erfassten Bewegung der Fahrzeugkomponente (FK) in Abhängigkeit von dem durch die Ermittlungseinheit (5) ermittelten Bewegungsraum der Fahrzeugkomponente (FK) dynamisch anzupassen.

9. Fahrzeug (F)nach einem der vorangehenden Ansprüche 1 bis 8,
wobei die ursprüngliche Projektionsfläche (PF) eine schalenförmige Projektionsfläche ist, die in Abhängigkeit von dem erfassten Bewegungsraum geometrisch verformt, insbesondere eingedellt oder ausgebeult, wird.

10. Fahrzeug (F)nach einem der vorangehenden Ansprüche 1 bis 9,
wobei eine Anzeigeeinheit (4) vorgesehen ist, welche die von der Bilddatenverarbeitungseinheit (3) erzeugte Fahrzeugumgebungsansicht (FUA) einem Fahrer (FA) des Fahrzeugs (F) anzeigt.

11. Verfahren zum Erzeugen einer Fahrzeugumgebungsansicht (FUA) für ein Fahrzeug (F) mit den Schritten:
(a) Bereitstellen (S1) von Kamerabildern (KB) einer Fahrzeugumgebung des Fahrzeugs;
(b) Ermitteln (S2) eines Bewegungsraumes mindestens einer Fahrzeugkomponente (FK) des Fahrzeugs (F);
(c) Anpassen (S3) einer Projektionsfläche (PF) in Abhängigkeit des ermittelten Bewegungsraumes; und
(d) Projizieren (S4) der bereitgestellten Kamerabilder (KB) auf die angepasste Projektionsfläche (PF) zur Erzeugung der Fahrzeugumgebungsansicht (FUA);
**dadurch gekennzeichnet dass**, der Schritt (S2) zum Ermitteln des Bewegungsraums, den Bewegungsraum der mindestens einen Fahrzeugkomponente (FK) des Fahrzeugs (F) in Abhängigkeit von Steuerdaten ermittelt, die zur Ansteuerung steuerbarer beweglicher Aktoren der jeweiligen Fahrzeugkomponente (FK) dienen.

12. Fahrzeug nach einem der Ansprüche 1-10 mit einem System zur Koordinierung von Arbeiten innerhalb eines Gebietes mit mehreren Fahrzeugen nach einem der Ansprüche 1-10 , die jeweils ein Fahrerassistenzsystem aufweisen, das an einen Transceiver (8) zur Kommunikation mit anderen Fahrerassistenzsystemen benachbarter Fahrzeuge und/oder einem Zentralrechner (Z) angeschlossen ist.

## Claims

1. Vehicle (F), comprising:
at least one vehicle component (FK), the vehicle component (FK) of the vehicle (F) comprising at least one controllably movable actuator, and
a device (1) for providing a vehicle environment view (FUA) for the vehicle (F), comprising:
- vehicle cameras (2) set up to supply camera images (KB) of a vehicle environment (FUA) of the vehicle (F) ;
- a determination device (5) set up to determine the movement space of at least one vehicle component (FK) of the vehicle (F); and
- an image data processing unit (3) set up to adapt, on the basis of the determined movement space of the at least one vehicle component (FK) of the vehicle (F), a projection area (PF) onto which the camera images (KB) supplied by the vehicle cameras (2) are projected to generate the vehicle environment view (FUA), **characterised in that**
the determination unit (5) is set up to determine the movement space of the at least one vehicle component (FK) of the vehicle (F) as a function of control data which serve to actuate the actuators of the vehicle component (FK) in question.

2. Vehicle (F) according to claim 1,
wherein the vehicle component (FK) has a work tool (AW) which is movable in a movement space of the vehicle environment to perform work.

3. Vehicle (F) according to claim 2,
wherein the vehicle component (FK) has a hydraulically actuable arm (A) to which the work tool (AW) is fixed.

4. Vehicle (F) according to either claim 2 or claim 3,
wherein the work tool (AW) of the vehicle component (FK) has a shovel for performing earthwork in the environment of the vehicle (F).

5. Vehicle (F) according to any of claims 1 to 4,
wherein the determination unit (5) is configured to detect movement trajectories of the vehicle component (FK) and to determine the movement space of the vehicle component (FK) on the basis of the detected movement trajectories.

6. Vehicle (F) according to any of preceding claims 1 to 5, wherein the image data processing unit (3) is set up to adapt the projection area (PF), additionally, as a function of navigation data and/or spatial data which the image data processing unit (3) receives from a navigation system (6) of the vehicle (F) and/or from an adjacent vehicle.

7. Vehicle (F) according to any of preceding claims 1 to 6, wherein the projection area (PF) is a cupped projection area which is adapted as a function of the detected movement space of the vehicle component (FK).

8. Vehicle (F) according to any of preceding claims 1 to 7, wherein the image data processing unit (3) is set up to adapt the projection area (PF) dynamically from an original projection area (PF), as a function of the movement space of the vehicle component (FK) determined by the determination unit (5), in the event of a sensor-detected movement of the vehicle component (FK).

9. Vehicle (F) according to any of preceding claims 1 to 8,
wherein the original projection area (PF) is a cupped projection area which is geometrically deformed, in particular indented or buckled, as a function of the detected movement space.

10. Vehicle (F) according to any of preceding claims 1 to 9,
wherein a display unit (4) is provided which displays the vehicle environment view (FUA) generated by the image data processing unit (3) to a driver (FA) of the vehicle (F).

11. Method for generating a vehicle environment view (FUA) for a vehicle (F), comprising the steps of:
(a) providing (S1) camera images (KB) of a vehicle environment of the vehicle;
(b) determining (S2) a movement space of at least one vehicle component (FK) of the vehicle (F);
(c) adapting (S3) a projection area (PF) as a function of the determined movement space; and
(d) projecting (S4) the provided camera images (KB) onto the adapted projection area (PF) to generate the vehicle environment view (FUA);
**characterised in that**
the step (S2) for determining the movement space determines the movement space of the at least one vehicle component (FK) of the vehicle (F) as a function of control data which serve to actuate controllable movable actuators of the vehicle component (FK) in question.

12. Vehicle according to any of claims 1-10, comprising a system for coordinating work within a region with a plurality of vehicles according to any of claims 1-10, which each have a driver assistance system which is connected to a transceiver (8) for communication with other driver assistance systems of adjacent vehicles and/or with a central computer (Z).

## Revendications

1. Véhicule (F), comportant :
au moins un composant de véhicule (FK), le composant de véhicule (FK) du véhicule (F) présentant au moins un actionneur mobile commandable, et
un dispositif (1) destiné à fournir une vue de l'environnement de véhicule (FUA) pour le véhicule (F),
comprenant :
- des caméras de véhicule (2) qui sont conçues pour fournir des images de caméra (KB) d'un environnement de véhicule (FUA) du véhicule (F) ;
- une unité de détermination (5) qui est conçue pour déterminer l'espace de déplacement d'au moins un composant de véhicule (FK) du véhicule (F) ; et
- une unité de traitement de données d'image (3) qui est conçue pour adapter, sur la base de l'espace de déplacement déterminé dudit au moins un composant de véhicule (FK) du véhicule (F), une surface de projection (PF) sur laquelle sont projetées les images de caméra (KB) fournies par les caméras de véhicule (2) pour générer la vue de l'environnement de véhicule (FUA),
**caractérisé en ce que**
l'unité de détermination (5) est conçue pour déterminer l'espace de déplacement dudit au moins un composant de véhicule (FK) du véhicule (F) en fonction de données de commande qui servent à commander les actionneurs du composant de véhicule (FK) respectif.

2. Véhicule (F) selon la revendication 1,
dans lequel le composant de véhicule (FK) présente un outil de travail (AW) qui peut être déplacé pour effectuer des travaux dans un espace de déplacement de l'environnement de véhicule.

3. Véhicule (F) selon la revendication 2,
dans lequel le composant de véhicule (FK) présente un bras (A) pouvant être actionné hydrauliquement, sur lequel l'outil de travail (AW) est fixé.

4. Véhicule (F) selon la revendication 2 ou 3,
dans lequel l'outil de travail (AW) du composant de véhicule (FK) présente une pelle pour effectuer des travaux de terrassement dans l'environnement de véhicule du véhicule (F) .

5. Véhicule (F) selon l'une des revendications 1 à 4,
dans lequel l'unité de détermination (5) est conçue pour détecter des trajectoires de déplacement du composant de véhicule (FK) et pour déterminer l'espace de déplacement du composant de véhicule (FK) sur la base des trajectoires de déplacement détectées.

6. Véhicule (F) selon l'une des revendications 1 à 5 précédentes,
dans lequel l'unité de traitement de données d'image (3) est conçue pour adapter en outre la surface de projection (PF) en fonction de données de navigation et/ou de données spatiales que l'unité de traitement de données d'image (3) reçoit d'un système de navigation (6) du véhicule (F) et/ou d'un véhicule voisin.

7. Véhicule (F) selon l'une des revendications 1 à 6 précédentes,
dans lequel la surface de projection (PF) est une surface de projection en forme de cuvette qui est adaptée en fonction de l'espace de déplacement détecté du composant de véhicule (FK).

8. Véhicule (F) selon l'une des revendications 1 à 7 précédentes,
dans lequel l'unité de traitement de données d'image (3) est conçue pour adapter dynamiquement la surface de projection (PF) à partir d'une surface de projection initiale (PF) lors d'un déplacement du composant de véhicule (FK) détecté par capteurs, en fonction de l'espace de déplacement du composant de véhicule (FK) déterminé par l'unité de détermination (5).

9. Véhicule (F) selon l'une des revendications 1 à 8 précédentes,
dans lequel la surface de projection initiale (PF) est une surface de projection en forme de cuvette qui est déformée géométriquement, en particulier renfoncée ou bosselée, en fonction de l'espace de déplacement détecté.

10. Véhicule (F) selon l'une des revendications 1 à 9 précédentes,
dans lequel il est prévu une unité d'affichage (4) qui affiche la vue de l'environnement de véhicule (FUA) générée par l'unité de traitement de données d'image (3) à un conducteur (FA) du véhicule (F).

11. Procédé pour générer une vue de l'environnement de véhicule (FUA) pour un véhicule (F), comprenant les étapes consistant à :
(a) fournir (S1) des images de caméra (KB) d'un environnement de véhicule du véhicule ;
(b) déterminer (S2) un espace de déplacement d'au moins un composant de véhicule (FK) du véhicule (F) ;
(c) adapter (S3) une surface de projection (PF) en fonction de l'espace de déplacement déterminé ; et
(d) projeter (S4) les images de caméra (KB) fournies sur la surface de projection (PF) adaptée afin de générer la vue de l'environnement de véhicule (FUA) ;
**caractérisé en ce que**
l'étape (S2) consistant à déterminer l'espace de déplacement détermine l'espace de déplacement dudit au moins un composant de véhicule (FK) du véhicule (F) en fonction de données de commande qui servent à commander des actionneurs mobiles commandables du composant de véhicule (FK) respectif.

12. Véhicule selon l'une des revendications 1 à 10, comportant un système pour coordonner des travaux à l'intérieur d'une zone comportant plusieurs véhicules selon l'une des revendications 1 à 10, qui présentent chacun un système d'assistance à la conduite qui est connecté à un émetteurrécepteur (8) pour communiquer avec d'autres systèmes d'assistance à la conduite de véhicules voisins et/ou avec un ordinateur central (Z).
